# FASCICULE DE BREVET EUROPEEN

(11) **EP 0 633 159 B1**
(45) Date de publication et mention de la délivrance du brevet: **05.03.1997**
(21) Numéro de dépôt: 94401500.7
(22) Date de dépôt: 01.07.1994
(51) Int. Cl.: B60N 2/30

(54) **Siège encastré pour le transport d'enfants dans un véhicule automobile**
Einbausitze für die Beförderung von Kindern in Kraftfahrzeugen
Boxed seat for the transport of children in automotive vehicles

(30) Priorité: 06.07.1993 FR 9308250
(43) Date de publication de la demande: 11.01.1995
(73) Titulaire: REGIE NATIONALE DES USINES RENAULT S.A., 92109 Boulogne Billancourt (FR)
(72) Inventeur: Guimard, Jacques, F-91400 Saclay (FR); Garnault, Michel, F-75020 Paris (FR); Aeschlimann, Jean-Louis, F-870210 Vauvillers (FR)
(74) Mandataire: Ernst-Schonberg, Michel

(56) Documents cités:
- EP-A- 0 286 542
- EP-A- 0 518 726
- DE-A- 2 807 064

## Description

L'invention concerne un siège encastré pour le transport d'enfants dans un véhicule automobile qui peut occuper une position d'utilisation déployée et une position escamotée à l'intérieur d'un logement formé sur un siège principal du véhicule.

La publication EP-A-0 286 542 (correspondant au préambule de la revendication indépendante) décrit un siège dans lequel une partie de l'assise est reliée à la structure du véhicule par une liaison mécanique constituée par deux groupes de bielles sensiblement parallèles deux à deux dans des plans transversaux et respectivement articulées sur ladite partie par une de leurs extrémités et autour de deux axes fixes parallèles portés par la structure par leurs autres extrémités.

En position d'utilisation de ce siège, l'ensemble des axes de fixation des bielles de liaison de l'assise avec la structure du véhicule supporte une charge verticale. Par contre lorsque le siège est soumis à des accélérations horizontales, le pivotement non désiré des bielles de liaison est évité par un verrou à crochet pivotant porté par l'armature du siège dont le crochet retient une tringle de verrouillage portée par les bielles de liaison.

Lors de la manoeuvre du siège vers sa position escamotée, l'importance des bielles de liaison et du verrou de blocage nuit au confort du siège. Ceci tient au fait que la multiplicité des bielles de liaison et leur qualité de montage ne permet pas d'augmenter l'épaisseur de l'assise du siège par rapport à celle du siège principal du véhicule.

Selon l'invention cet inconvénient est évité par le fait qu'un organe support respectivement articulé sur le plateau porteur du coussin de l'assise et sur la structure du véhicule est constitué par une plaque qui possède, d'une part, des côtés transversaux montés à articulation autour d'axes portés respectivement par le plateau porteur du coussin et par la structure du véhicule et, d'autre part, une plaque de rétention transversale articulée sur la plaque de support et en contact de butée sur la structure.

Selon une autre caractéristique de l'invention le côté postérieur du plateau porteur et son coussin de l'assise sont en appui de suspension élastique vertical et antéro-postérieur sur le siège principal du véhicule.

Le siège ainsi réalisé présente l'avantage de ne pas modifier l'aménagement des sièges du véhicule et peut aisément s'adapter à un siège principal existant.

Diverses autres caractéristiques et avantages de l'invention ressortiront de la description qui suit en référence aux dessins annexés dont :

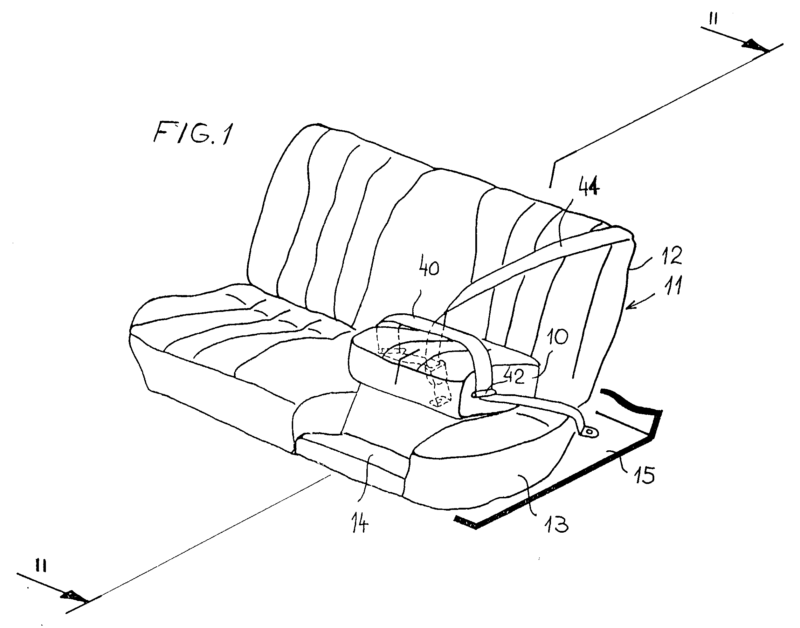

- la figure 1 est une vue en perspective d'un siège principal arrière de véhicule automobile portant le siège de transport pour passager enfant en position érigée,
- la figure 2 est une vue en coupe longitudinale du siège selon la ligne 2-2 de la figure 1,
- la figure 3 est une vue en coupe longitudinale du siège en position encastrée de celui-ci.

Le siège 10 de transport du passager enfant représenté au dessin, fait partie d'un siège principal arrière 11 comportant un dossier 12 et une assise 13, cette dernière possédant un logement 14 de réception du siège 10. L'assise 13 est posée sur le plancher 15 de structure du véhicule portant une charnière support 16 transversale d'une liaison mécanique qui permet le montage et l'immobilisation du siège 10 sur l'assise 13.

Le coussin 20 du siège 10 est solidaire d'un plateau 21 relié par une plaque de support 22 au plancher 15.

La plaque de support 22 possède deux côtés transversaux montés à articulation autour de deux axes 25, 26 portés respectivement par le plateau 21 du coussin 20 et par le plancher 15 de la structure du véhicule. Un axe intermédiaire 27 parallèle aux axes 25, 26 est porté par la plaque 22 et permet l'articulation d'une plaque de rétention transversale 28. Cette dernière est sollicitée par une épingle à ressort 23 au contact d'une butée 30 rapportée sur le plancher 15.

Selon une particularité du siège, la plaque de rétention 28 possède un bord d'accrochage 29 qui s'étend parallèlement à l'axe 27 et qui est tourné vers la butée rapportée 30 sur le plancher de structure 15.

La butée 30 limite longitudinalement une rampe 31 de guidage du bord d'accrochage 29 de la plaque de rétention 28 et porte l'axe 26.

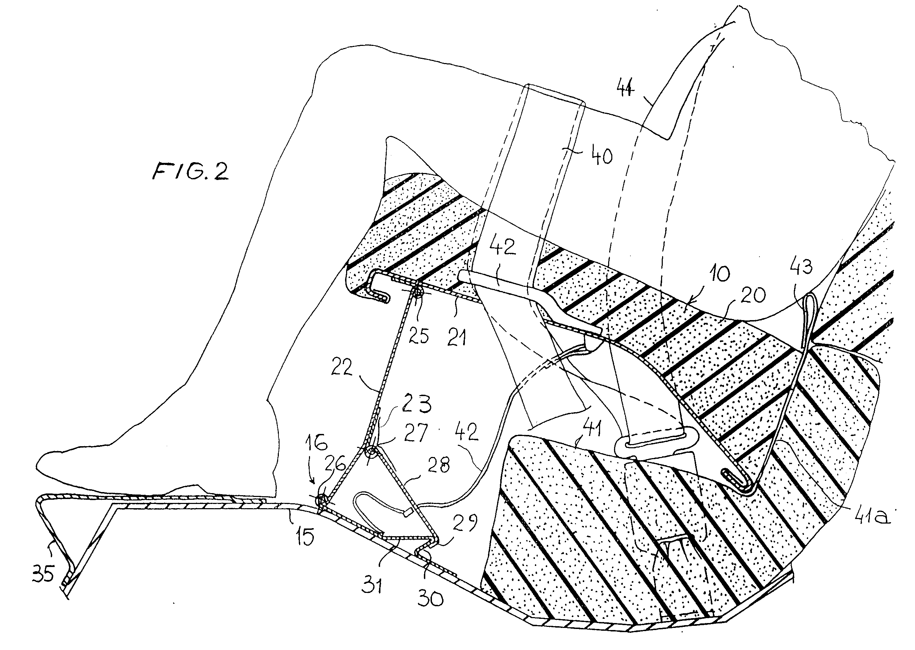

Ainsi que cela est montré à la figure 2, le côté postérieur du plateau 21 porteur du coussin 20 est en appui de suspension vertical sur un élément 41 du siège principal 11.

Un bord sensiblement vertical 41a dudit élément du siège principal 11 constitue ici l'appui antéro-postérieur du coussin 20. Une telle disposition constructive assure la suspension verticale du coussin 20 et l'amortissement longitudinal de l'ensemble siège-passager.

Dans le but de faciliter le rangement du siège 10 dans sa position escamotée, la plaque de rétention 28 porte l'ancrage d'un lien souple 42 de traction attelé au plateau 21.

Ainsi que cela est montré à la figure 2 une tirette 43 fixée au coussin 20 permet la rotation du coussin 20 et de son plateau 21 autour de l'axe 25. Au cours de cette rotation le lien 42 est tendu et exerce un effort de traction sur la plaque 28 dans le sens d'une libération de la butée 30.

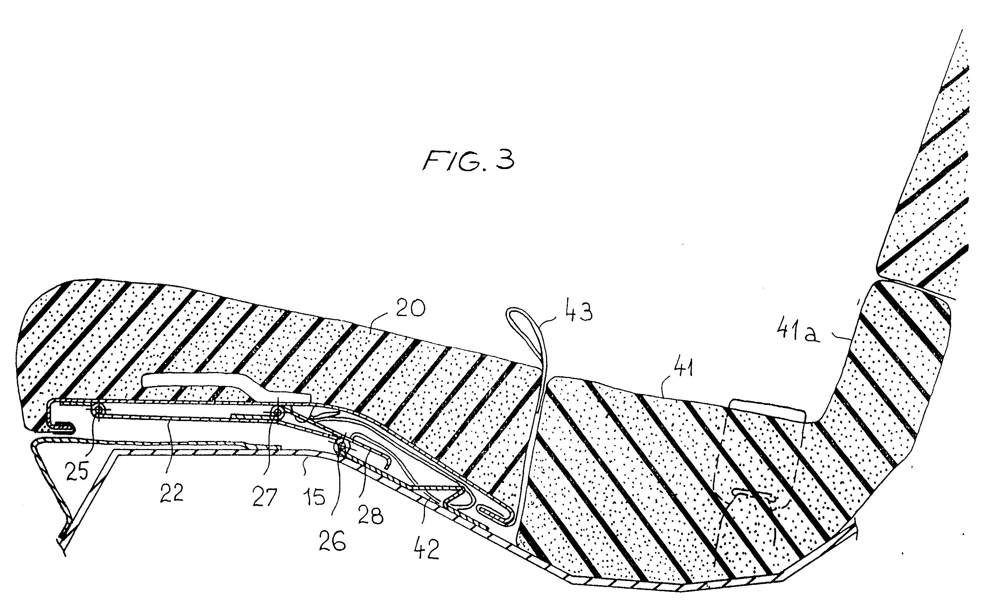

La plaque 22 peut alors basculer vers l'avant dans le but de favoriser le rangement du coussin 20 au contact du plancher 15 comme indiqué à la figure 3.

Comme indiqué au dessin, le plancher 15 porte également un élément de traverse 35, réalisé à partir d'une tôle pliée soudée sur le plancher 15. La traverse 35 soutient le coussin 20 en position escamotée du siège 10 et assure la fonction de repose-pied en position d'utilisation déployée du siège 10.

Dans le but de faire bénéficier au siège 10, la disposition constructive et fonctionnelle de confort du siège principal 11, la base du plateau 21 est conformée en une voûte superposable à la surface du plancher comme indiqué à la figure 3.

Le passager enfant, sanglé sur le siège 10, est retenu par la ceinture de sécurité du passager adulte qui possède une sangle transversale 40 et une sangle diagonale 44 selon une disposition conventionnelle.

Dans le but de positionner correctement la sangle transversale 40 sur le haut des cuisses de l'enfant, des passants 42 de la sangle sont prévus sur les flancs latéraux du coussin 20 et sont portés par le plateau 21.

## Revendications

1. Siège encastré (10) pour le transport d'enfants dans un véhicule automobile, qui peut occuper une position d'utilisation déployée et une position escamotée à l'intérieur d'un logement formé sur un siège principal (11) du véhicule, dans lequel le coussin (20) de l'assise du siège (10) est solidaire d'un plateau (21) relié par un organe support (22) respectivement articulé sur ledit plateau (21) et autour d'un axe fixe (26) porté par la structure (15) du véhicule, caractérisé par le fait que l'organe support est constitué par une plaque (22) qui possède, d'une part, des côtés transversaux montés à articulation autour d'axes (25, 26) portés respectivement par le plateau (21) porteur du coussin (20) et par la structure (15) du véhicule et, d'autre part, une plaque de rétention (28) transversale articulée sur la plaque de support (22) et en contact de butée sur la structure (15).

2. Siège selon la revendication 1, caractérisé par le fait que le côté postérieur du plateau (21) porteur et son coussin de l'assise (20) sont en appui de suspension vertical et antéro-postérieur sur le siège principal (11) du véhicule.

3. Siège selon la revendication 1, caractérisé par le fait que le contact de butée (30) de la structure (15) limite longitudinalement une rampe (31) de guidage orientée de la plaque de rétention (28).

4. Siège selon la revendication 3, caractérisé par le fait que la plaque de rétention (28) porte l'ancrage d'un lien (42) de traction attelé au plateau (21) porteur du coussin.

## Claims

1. A built-in seat (10) for transporting children in a motor vehicle, which can occupy a deployed position of use and a position of being retracted into a housing formed on a main seat (11) of the vehicle, in which the cushion (20) of the squab of the seat (10) is fixed with respect to a plate (21) connected by a support member (22) respectively pivoted to said plate (21) and about a fixed axis (26) carried by the structure (15) of the vehicle, characterised in that the support member is formed by a plate portion (22) which has on the one hand transverse edges mounted pivotably about axes (25, 26) respectively carried by the plate (21) carrying the cushion (20) and by the structure (15) of the vehicle and, on the other hand, a transverse retaining plate portion (28) pivoted to the support plate portion (22) and in abutment contact against the structure (15).

2. A seat according to claim 1 characterised in that the rear edge of the carrier plate (21) and its cushion of the squab (20) are supported vertically and at the front and rear in a suspended condition on the main seat (11) of the vehicle.

3. A seat according to claim 1 characterised in that the abutment contact (30) of the structure (15) longitudinally delimits an oriented guide ramp (31) of the retaining plate portion (28).

4. A seat according to claim 3 characterised in that the retaining plate portion (28) carries the anchorage for a tension tie (42) coupled to the plate (21) carrying the cushion.

## Patentansprüche

1. Einbausitz (10) für die Beförderung von Kindern in einem Kraftfahrzeug, welcher eine ausgeklappte Benutzungsstellung und eine eingeklappte Stellung im Inneren einer im Hauptsitz (11) des Fahrzeugs ausgebildeten Aussparung einnehmen kann, wobei die Polsterung (20) der Sitzfläche des Sitzes (10) fest mit einem Boden (21) verbunden ist, der mittels einer Halterung (22) am Boden (21) und an einer vom Kraftfahrzeugaufbau (15) getragenen feststehenden Achse (26) angelenkt ist, dadurch gekennzeichnet, daß die Halterung aus einer Platte (22) besteht, die einerseits Querseiten aufweist, die gelenkig an Achsen (25, 26) angelenkt sind, welche von dem die Polsterung (20) tragenden Boden (21) und von dem Fahrzeugaufbau (15) getragen werden und andererseits eine quer verlaufende Halteplatte (28) aufweist, die an der Tragplatte (22) angelenkt ist und sich auf dem Aufbau (15) abstützt.

2. Sitz nach Anspruch 1, dadurch gekennzeichnet, daß die hintere Seite des Tragbodens (21) und seine Sitzpolsterung (20) sich in senkrechter Richtung auf der Vorderseite des Hauptsitzes (11) des Fahrzeugs abstützen.

3. Sitz nach Anspruch 1, dadurch gekennzeichnet, daß ein Kontaktanschlag (30) des Aufbaus (15) in Längsrichtung eine zur Halteplatte (28) gerichtete Führungsschiene (31) begrenzt.

4. Sitz nach Anspruch 3, dadurch gekennzeichnet, daß die Halteplatte 28 die Verankerung eines Zugriemens (42) trägt, der an dem Tragboden (21) für die Polsterung befestigt ist.
